# EUROPÄISCHE PATENTSCHRIFT

(11) **EP 1 331 162 B1**
(45) Veröffentlichungstag und Bekanntmachung des Hinweises auf die Patenterteilung: **30.07.2008**
(21) Anmeldenummer: 02027889.1
(22) Anmeldetag: 13.12.2002
(51) Int. Cl.: B62D 25/08, B62D 29/04, B62D 65/02, B60K 5/12

(54) **Aufbau für Kraftfahrzeuge mit Tragstruktur aus hochfestem Kunststoff**
Car body with support frame of high-strength synthetic material
Carrosserie automobile avec structure portante en matériau synthétique rigide

(30) Priorität: 26.01.2002 DE 10202957
(43) Veröffentlichungstag der Anmeldung: 30.07.2003
(73) Patentinhaber: Dr. Ing. h.c. F. Porsche Aktiengesellschaft, 70435 Stuttgart (DE)
(72) Erfinder: Stoffels, Oliver, 71634 Ludwigsburg (DE); Steinhauser, Dieter, 73630 Remshalden (DE); Meier, Thomas, 76287 Rheinstetten (DE)

(56) Entgegenhaltungen:
- EP-A- 0 295 661
- EP-A- 0 372 987
- EP-A- 0 727 343
- DE-C- 767 115
- DE-C- 3 932 196
- FR-A- 2 687 352
- GB-A- 2 317 858
- US-A- 4 216 839

## Beschreibung

Die Erfindung betrifft einen Aufbau für Kraftfahrzeuge, insbesondere Personenkraftwagen nach dem Oberbegriff des Patentanspruchs 1.

Ein bekannter Personenkraftwagen, IT Zeitschrift Quattroroute 45 (2000) 531 (Januar) Seite 138, der zur Hochleistungskategorie zählt weist einen Aufbau mit einer zweisitzigen Fahrgastraumstruktur auf. Diese Fahrgastraumstruktur besteht aus hochfestem Kunststoff und ist mit einem Antriebsaggregat direkt d.h. ohne Zwischenschaltung einer Tragstruktur verblockt. Das Antriebsaggregat, bestehend aus Brennkraftmaschine, Kupplung und Getriebe ist zwischen den Radachsen, jedoch benachbart einer Hinterachse - Mittelmotor - Anordnung - in den Personenkraftwagen eingebaut.

Aus der EP 295 661 A2 geht eine hintere Tragstruktur eines Aufbaus hervor, die unter Vermittlung nachgiebiger Elemente mit einer Fahrgastraumstruktur verbunden ist. Die besagte Tragstruktur wird durch eine Rohrrahmenkonstruktion gebildet, umfassend obere und untere Längsträger bzw. Querträger und zwischen letzteren verlaufende Stützträger. Darüber hinaus sind an dieser Rohrrahmenkonstruktion Vorkehrungen getroffen, um ein Antriebsaggregat und Radaufhängungsglieder aufzunehmen.

Die FR 940 982 umfasst einen Aufbau mit einer Fahrgastraumstruktur, die von einer vorderen und eine hinteren Tragstruktur begrenzt wird. Beide Tragstrukturen werden durch metallische Gitterrohrrahmen gebildet, wobei eine Tragstruktur ein Antriebsaggregat aufnimmt. Von der Fahrgastraumstruktur sind lageraugenartige Verlängerungen weggeführt, die von Lagergabeln, angebracht an Rohrträgern der Tragstrukturen, umgriffen werden. Zur Befestigung der Tragstrukturen an der Fahrgastraumstruktur dienen Haltemittel.

Die gattungsbildende GB-A-2317858 zeigt eine aus hochfestem Kunststoff bestehende Aufbaustruktur für Kraftfahrzeuge, die in Spaceframebauweise gefertigt ist, das heißt, der tragende Rahmen des Aufbaus besteht bei dieser Konstruktion aus einer Vielzahl von in geeigneter Weise miteinander verbundener Hohlprofile. Bei der GB-A-2317858 setzt die Aufbaustruktur aus mehreren Modulen zusammen, wobei die beiden endseitigen Module jeweils über kombinierte Steck- und Klebeverbindungen mit einem dazwischenliegenden Fahrgastraummodul verbunden sind. Jedes endseitige Modul umfasst zwei - in der Seitenansicht gesehen - U-förmig ausgebildete Rahmenteile, die u.a. über einen unteren plattenförmigen Abschnitt miteinander verbunden sind.

Es ist Aufgabe der Erfindung eine Tragstruktur für einen Aufbau eines Kraftfahrzeugs zu schaffen, die sich durch geringes Gewicht sowie hohe Festigkeit auszeichnet. Dabei sollte die Tragvorrichtung bei vertretbarem Raumanspruch ein Antriebsaggregat funktionsgerecht aufnehmen und sich auf vorteilhafte Weise in einen Aufbau eines Kraftfahrzeugs integrieren lassen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Hüllvorrichtung eine hohe auch den Aufbau an sich versteifende Festigkeit aufweist und die auftretenden statischen und dynamischen Belastungen sicher aufnimmt. Dabei umgibt die Hüllvorrichtung das Antriebsaggregat, bestehend aus Brennkraftmaschine, Kupplung und Getriebe, auf raumsparende und zugänglich Art, wobei das teils sichtbare Antriebsaggregat und der Verlauf der Querträger und der Längsträger bzw. sowie die Gestaltung der Durchgangsöffnungen einen besonderen ästhetischen Effekt erzeugt. Außerdem bietet sich an in die Hüllvorrichtung Aufnahmen für Lager des Antriebsaggregats zu integrieren, das mit besagter Hüllvorrichtung zu einer vormontierten Baueinheit zusammensetzbar ist, was zur Montagevereinfachung beiträgt. Schließlich ist die Hüllvorrichtung dadurch leicht herstellbar, dass sie aus einem Oberteil und einem Unterteil besteht, die unter Vermittlung von Schrauben miteinander verbunden sind.

In der Zeichnung ist ein Ausführungsbeispiel der Erfindung dargestellt, das nachstehend näher beschrieben ist.

Es zeigen
- Fig. 1: eine Schrägansicht eines schematisch dargestellten Aufbaus eines Kraftfahrzeugs, und zwar mit einer Fahrgastraumstruktur und einer Tragstruktur, jedoch ohne Schließwand
- Fig. 2: eine Ansicht von oben auf die Tragstruktur gemäß Fig.1 mit einem darin angedeuteten Antriebsaggregat,

- Fig. 3: eine Ansicht entsprechend Fig. 2, jedoch ohne Antriebsaggregat,
- Fig. 4: eine Schrägansicht auf die Tragstruktur von hinten links und oben,
- Fig. 5: einen Schnitt nach der Linie V-V der Fig. 3,
- Fig. 6: eine Ansicht schräg von oben auf eine Schließwand der Tragstruktur,
- Fig. 7: einen Schnitt nach der Linie VII-VII der Fig. 6,

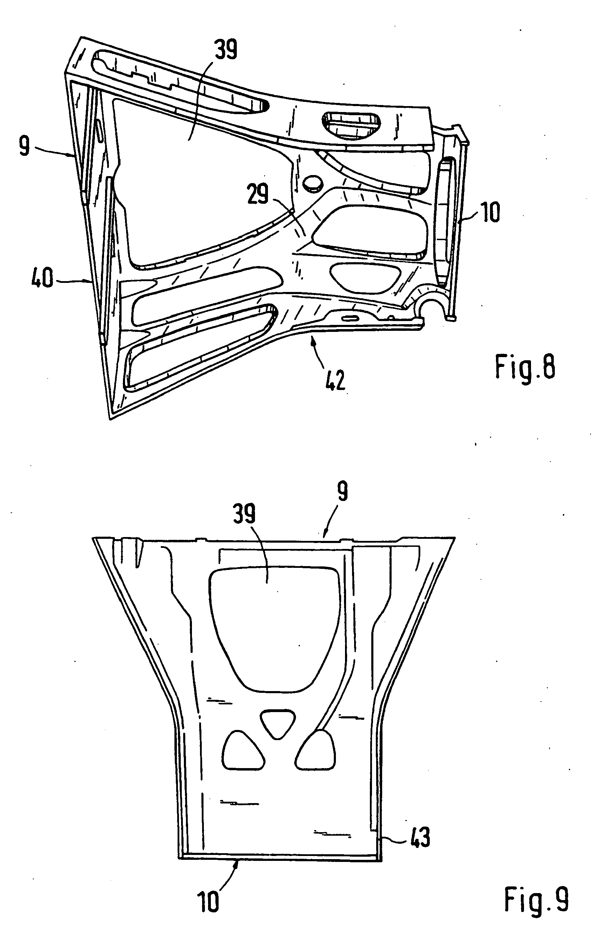

- Fig. 8: eine Schrägansicht von unten auf ein Oberteil der Tragstruktur und
- Fig. 9: eine Ansicht von oben auf ein Unterteil der Tragstruktur.

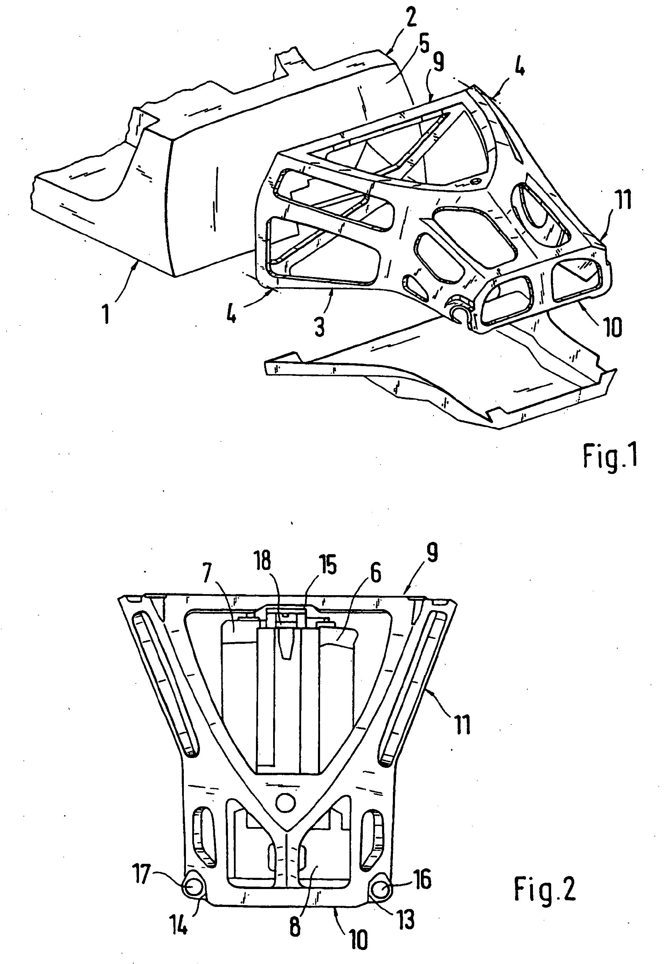

Von einem Kraftfahrzeug 1, bzw. Personenkraftwagen der Hochleistungskategorie ist lediglich ein Aufbau 1 dargestellt, der eine bspw. aus hochfestem Kunststoff bestehende Fahrgastraumstruktur 2 und eine Tragstruktur 3 umfasst. Die Tragstruktur 3 ist unter Vermittlung von bspw. als Schrauben 4 ausgebildeten Halteelementen an eine hintere Querwand 5 der Fahrgastraumstruktur angeschlossen und dient zur Aufnahme eines Antriebsaggregats 6 und Radaufhängungsgliedern. Das Antriebsaggregat 6 - Fig. 2 - wird durch eine Brennkraftmaschine 7, eine Kupplung und ein Getriebe 8 gebildet, die miteinander verblockt sind, wobei sich die Brennkraftmaschine 7 zwischen Radachsen des Kraftfahrzeugs, jedoch benachbart einer Hinterachse - Mittelmotor-Anordnung - erstreckt.

Die Tragstruktur 3 verläuft in - Fahrzeuglängsrichtung A-A gesehen - zwischen einem benachbart der Fahrgastraumstruktur 2 angeordneten Anschlussbereich 9 und einem hinteren einem Heck des Kraftfahrzeugs zugekehrten Endbereich 10 und ist als rohrartige Hüllvorrichtung 11 mit einem Innenraum 12 gestaltet, in dem das Antriebsaggregat 6 angeordnet ist; die Hüllvorrichtung 11 umgibt zumindest einen Teil der Gehäuse des Antriebsaggregats 6. Darüber hinaus ist die Hüllvorrichtung 11 aus hochfestem insbesondere glasfaserverstärktem Kunststoff - CFK - hergestellt.

Die Hüllvorrichtung 11 weist zumindest erste, zweite und dritte Aufnahmen 13,14 und 15 für Lager 16,17 18 des Antriebsaggregats 6 auf, welche Aufnahmen 13,14 und 15 in die Hüllvorrichtung integriert sind. Dabei besteht die Möglichkeit, dass die Hüllvorrichtung 11 und das Antriebsaggregat eine vormontierte Baueinheit darstellt, die bei der Produktion des Kraftfahrzeugs mit der Fahrgastraumstruktur 2 verbunden wird.

Zur Festigkeitsoptimierung der Hüllvorrichtung 11 weist sie eine Trägervorrichtung 19 auf, die im Anschlussbereich 9 einen ersten profilierten Querträger 20 und im Endbereich einen zweiten profilierten Querträger 21 auf, zwischen denen sich mehrere profilierte Längsträger 22, 23,24,25,26,27 und 28 erstrecken. Eine vorteilhafte Anordnung dieser Längsträger wird erreicht, wenn zumindest zwischen einem Tel von ihnen ein weiterer Querträger 29 vorgesehen ist.

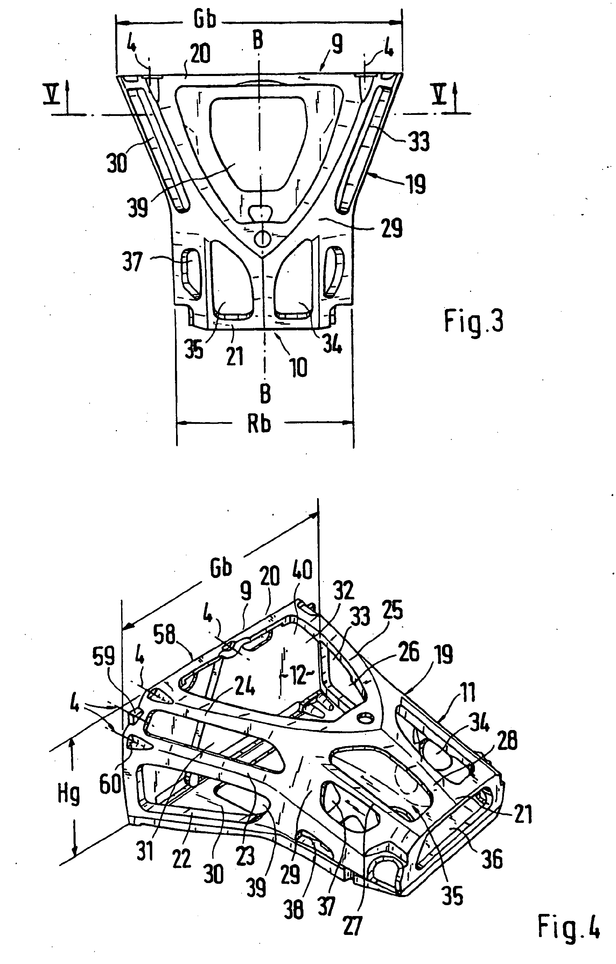

Aus Fig. 3 ist ersichtlich, dass - von oben auf das Kraftfahrzeug gesehen - die Hüllvorrichtung 11 sich zwischen dem Anschlussbereich 9 und dem hinteren Endbereich 10 von einer ersten Gesamtbreite Gb aus zu einer zweiten reduzierten Breite Rb verjüngt. Dabei beginnt die zweite reduzierte Breite Rb etwa in einem mittleren Abschnitt zwischen dem Anschlussbereich 9 und Endbereich 10 der symmetrisch zu einer Fahrzeuglängsmittelebene B-B ausgebildeten Hüllvorrichtung 11, und zwar dort, wo auch der sie versteifende weiter Querträger 29 verläuft; die reduzierte Breite Rb bleibt bis zum hinteren Endbereich 10 in etwa konstant.

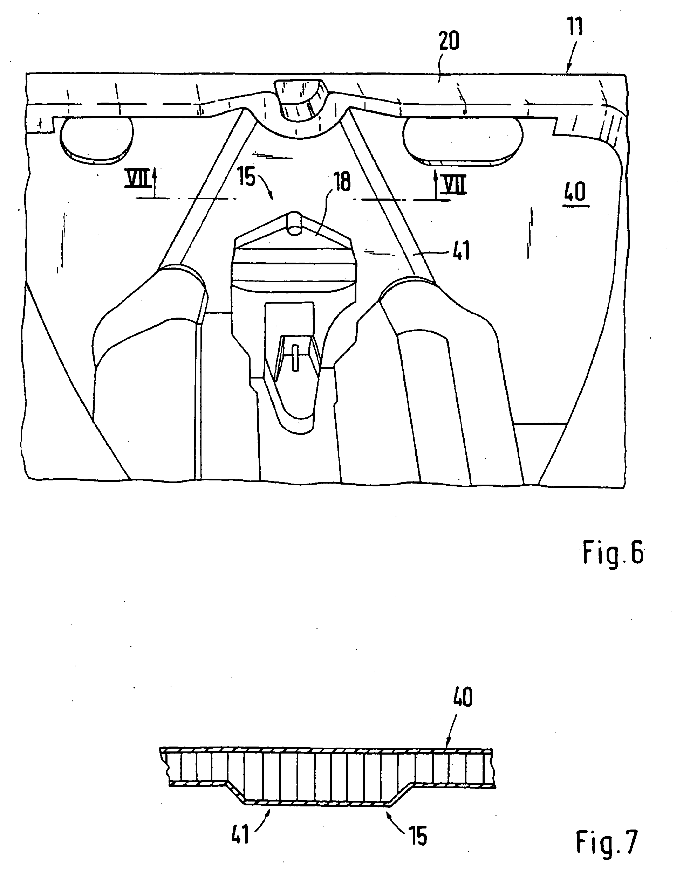

Die Querträger 20,21 und 29 sowie die Längsträger 22,23,24,25,26,27 und 28 begrenzen Durchgangsöffnungen 30,31,32,33,34,35,36,37,38 und 39, über die das Antriebsaggregat 6 zugänglich ist. Auch tragen diese Träger und die Durchgangsöffnungen bei entsprechender Gestaltung dazu bei, dass die Hüllvorrichtung 11 einen besonderen ästhetische Effekt erzielt, wobei Verlauf und Dimensionierung der besagten Träger zum einen von den Abmessungen des Antriebsaggregats 6 und zum anderen von den statische und dynamischen Belastungen bestimmt wird, die auf die Hüllvorrichtung 11 einwirken, wobei für ihre konstruktive Gestaltung der Einsatz iterativer und rechnerischer Maßnahmen geeignet ist. Im Anschlussbereich 9 weist die Hüllvorrichtung 11 eine Schließwand 40 auf, die sich im wesentlichen über die gesamte Höhe Hg und die gesamte Breite Gb der besagten Hüllvorrichtung erstreckt und bspw. als CFK Teil in letztere integriert ist. Die Schließwand 40 ist mit einer örtlichen Querschnittserweiterung 41 versehen, die die Aufnahme 15 für das Lager 18 des Antriebsaggregats 6 bildet. Die Querschnittserweiterung 41 ist eine in Richtung Antriebsaggregat 6 hin ausgeformte Verdickung - Fig. 7 -, erstreckt sich über die gesamte Höhe Hg der Schließwand 40 und besitzt eine auf den Kopf gestellte V-Form.

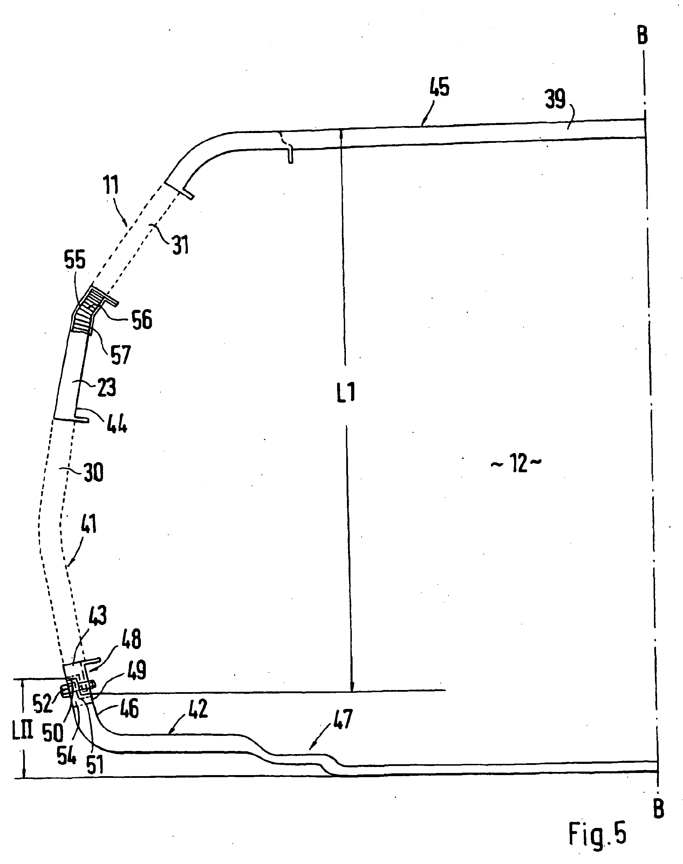

Die Hüllvorrichtung 11 wird durch ein Oberteil 42 und ein Unterteil 43 gebildet - Fig. 5 -. Das Oberteil weist seitliche, aufrechte Hüllabschnitte 44 und einen horizontal ausgerichteten Hüllabschnitt 45 auf; das Unterteil 43 aufrechte Hüllabschnitte 46 und einen horizontalen Hüllabschnitt 47. Die Länge LI der Hüllabschnitte 44 des Oberteils 42 ist größer als die Länge LII der Hüllabschnitte 46 des Unterteils 43, und erste bzw. zweite freie einander zugekehrte Enden 48 und 49 wirken zusammen. Hierzu sind die freien Enden 48 und 49 mit Stufen 50 und 51 versehen, an denen diese Enden zusammengesetzt sind, dergestalt, dass sich abgesetzte Verbindungen ergeben. Im Bereich der abgesetzten Verbindungen sind das Oberteil 42 und das Unterteil 43 unter Vermittlung von Schrauben 52 miteinander verbunden, und die Stufen 50 und 51 sind mit in die Hüllabschnitte 44 und 46 eingebrachten metallischen Einsätzen 53 und 54 versehen. In dem Oberteil 42 bzw. in dem Hüllabschnitten 44 ist der Längsträger 23 integriert, der den prinzipiellen Aufbau im wesentlichen aller Träger der Trägervorrichtung 19 wiedergibt. Danach umfasst dieser Längsträger 23 im Querschnitt eine CFK Außenschale 55, eine Wabenstruktur 56 und eine Innenschale 57, die zu einer hochfesten Struktur zusammengefügt und verarbeitet sind.

Die Hüllvorrichtung 11 ist mit den Schrauben 4 an der Fahrgastraumstruktur 2 gehalten - Fig. 4 -. Dazu sind z.B. entlang eines äußeren Umfangs 58 des Querträgers 20 erste konsolenartige Laschen 59 und zweite konsolenartige Laschen 60 vorgesehen; die Laschen 59 werden durch örtliche Erweiterungen und die Laschen 60 durch Einformungen in dem Querträger 20 gebildet.

## Patentansprüche

1. Aufbau für Kraftfahrzeuge (1), insbesondere Personenkraftwagen, mit einer Fahrgastraumstruktur (2) aus hochfestem Kunststoff und wenigstens einer daran anschließenden Tragstruktur (3) aus hochfestem Kunststoff zur Aufnahme eines Antriebsaggregats (6) und von Radführungsgliedern, wobei die einen Anschlussbereich (9) an die Fahrgastraumstruktur (2) und einen hinteren Endbereich (10) aufweisende Tragstruktur (3) unter Vermittlung von Halteelementen (4) mit der Fahrgastraumstruktur (2) verbunden ist, wobei die Tragstruktur (3) durch eine festigkeitsoptimierte, sich in Fahrzeuglängsrichtung (A-A) erstreckende räumliche Hüllvorrichtung (11) aus hochfestem Kunststoff gebildet wird, die das Antriebsaggregat (6) rundherum umschließt, wobei die Hüllvorrichtung (11) eine Trägervorrichtung (19) und mehrere seitliche, sowie obere und untere, den Zugang zum Antriebsaggregat (6) gewährende Durchgangsöffnungen (30 - 39) aufweist, **dadurch gekennzeichnet, dass** die Hüllvorrichtung (11) rohrartig ausgebildet und benachbart dem Anschlussbereich (9) eine Schließwand (40) aufweist, die in besagte Hüllvorrichtung (11) integriert ist.

2. Aufbau nach Anspruch 1, **dadurch gekennzeichnet, dass** die festigkeitsoptimierte Hüllvorrichtung (11) aus glasfaserverstärktem Kunststoff gebildet wird.

3. Aufbau nach einem oder mehreren der vorangehenden Ansprüche, **dadurch gekennzeichnet, dass** die Hüllvorrichtung (11) und das Antriebsaggregat (6) eine vormontierte Baueinheit bilden.

4. Aufbau nach Anspruch 1 oder 2, **dadurch gekennzeichnet, dass** die Hüllvorrichtung (11) benachbart dem Anschlussbereich (9) einen ersten profilierten Querträger (20) und benachbart dem hinteren Endbereich (10) einen zweiten profilierten Querträger (21) umfasst, zwischen denen sich mehrere profilierte Längsträger (22,23,24,25,26,27,28) erstrecken.

5. Aufbau nach Anspruch 3, **dadurch gekennzeichnet, dass** zwischen zumindest einem Teil der Längsträgern ein weiterer mittlerer Querträgerträger (29) vorgesehen ist.

6. Aufbau nach Anspruch 1 oder 2, **dadurch gekennzeichnet, dass** die Schließwand (40) mit einer örtlichen Querschnittsverdickung (41) versehen ist.

7. Aufbau nach Anspruch 6, **dadurch gekennzeichnet, dass** die Querschnittsverdickung sich über einen wesentlichen Teil der Höhe (Hg) der Schließwand (40) erstreckt und z.B. eine auf den Kopf gestellte V-Form besitzt.

8. Aufbau nach Anspruch 1 oder 2, **dadurch gekennzeichnet dass** die Hüllvorrichtung (11) durch ein Oberteil (42) und ein Unterteil (43) gebildet wird.

9. Aufbau nach Anspruch 8, **dadurch gekennzeichnet, dass** das Oberteil (42) seitliche Hüllabschnitte (44) und einen oberen horizontalen Hüllabschnitt (45) aufweist, wobei erste freie Enden (48) des Oberteils (42) mit zweiten freien Enden des (49) Unterteils 43) zusammenwirken.

10. Aufbau nach Anspruch 9, **dadurch gekennzeichnet, dass** die ersten freien Enden (48) und die zweiten freien Enden (49) mit Stufen (50,51) versehen sind, die abgesetzte Verbindungen bilden.

11. Aufbau nach Anspruch 10, **dadurch gekennzeichnet, dass** das Oberteil (42) und das Unterteil (43) der Hüllvorrichtung (11) im Bereich der abgesetzten Verbindungen unter Vermittlung von Schrauben (52) miteinander verbunden sind.

## Claims

1. Body for motor vehicles (1), in particular cars, with a passenger compartment structure (2) made of high-strength synthetic material and with at least one high-strength synthetic material support structure (3) which is connected to said passenger compartment structure and is intended for accommodating a drive unit (6) and wheel control elements, wherein the support structure (3) which has a connecting region (9) to the passenger compartment structure (2) and has a rear end region (10) is connected to the passenger compartment structure (2) by means of holding elements (4), wherein the support structure (3) is formed by a strength-optimized, three-dimensional covering device (11) which extends in the longitudinal direction (A-A) of the vehicle, is made of high-strength synthetic material and encloses the drive unit (6) all the way around, and wherein the covering device (11) has a support device (19) and a plurality of lateral, and also upper and lower passage openings (30-39) providing access to the drive unit (6), **characterized in that** the covering device (11) is of tubular design and, adjacent to the connecting region (9), has a closing wall (40) which is integrated in said covering device (11).

2. Body according to Claim 1, **characterized in that** the strength-optimized covering device (11) is formed from glass-fibre-reinforced synthetic material.

3. Body according to one or more of the preceding claims, **characterized in that** the covering device (11) and the drive unit (6) form a preassembled constructional unit.

4. Body according to Claim 1 or 2, **characterized in that** the covering device (11) comprises a first profiled crossmember (20) adjacent to the connecting region (9) and a second profiled crossmember (21) adjacent to the rear end region (10), with a plurality of profiled longitudinal members (22, 23, 24, 25, 26, 27, 28) extending between said crossmembers.

5. Body according to Claim 3, **characterized in that** a further central crossmember (29) is provided between at least some of the longitudinal members.

6. Body according to Claim 1 or 2, **characterized in that** the closing wall (40) is provided with a local cross-sectional thickening (41).

7. Body according to Claim 6, **characterized in that** the cross-sectional thickening extends over a substantial part of the height (Hg) of the closing wall (40) and has, for example, a V shape placed upside down.

8. Body according to Claim 1 or 2, **characterized in that** the covering device (11) is formed by an upper part (42) and a lower part (43).

9. Body according to Claim 8, **characterized in that** the upper part (42) has lateral covering sections (44) and an upper horizontal covering section (45), with first free ends (48) of the upper part (42) interacting with second free ends (49) of the lower part (43).

10. Body according to Claim 9, **characterized in that** the first free ends (48) and the second free ends (49) are provided with steps (50, 51) which form offset connections.

11. Body according to Claim 10, **characterized in that** the upper part (42) and the lower part (43) of the covering device (11) are connected to each other in the region of the offset connections by means of bolts (52).

## Revendications

1. Carrosserie de véhicule automobile (1), notamment de véhicule léger, comprenant une structure d'habitacle de conduite (2) en matériau synthétique de haute résistance et au moins une structure portante (3) s'y raccordant en matériau synthétique de haute résistance, pour recevoir une unité d'entraînement (6) et des organes de guidage des roues, la structure portante (3) présentant une région de raccordement (9) à la structure d'habitacle de conduite (2) et une région d'extrémité arrière (10) étant connectée à la structure d'habitacle de conduite (2) par l'intermédiaire d'éléments de fixation (4), la structure portante (3) étant formée par un dispositif d'enveloppe (11) en matériau synthétique de haute résistance, tridimensionnel, s'étendant dans la direction longitudinale du véhicule (A-A) et de résistance optimisée, qui entoure entièrement l'unité d'entraînement (6), le dispositif d'enveloppe (11) présentant un dispositif de support (19) et plusieurs ouvertures de passage (30 - 39) latérales, ainsi que supérieures et inférieures, permettant l'accès à l'unité d'entraînement (6), **caractérisée en ce que** le dispositif d'enveloppe (11) est réalisé en forme de tube et présente, à proximité de la région de raccordement (9), une paroi de fermeture (40) qui est intégrée dans ledit dispositif d'enveloppe (11).

2. Carrosserie selon la revendication 1, **caractérisée en ce que** le dispositif d'enveloppe (11) de résistance optimisée est en matériau synthétique renforcé par des fibres de verre.

3. Carrosserie selon l'une quelconque ou plusieurs des revendications précédentes, **caractérisée en ce que** le dispositif d'enveloppe (11) et l'unité d'entraînement (6) forment une unité constructive prémontée.

4. Carrosserie selon la revendication 1 ou 2, **caractérisée en ce que** le dispositif d'enveloppe (11) comprend, à proximité de la région de raccordement (9), un premier support transversal profilé (20) et à proximité de la région d'extrémité arrière (10) un deuxième support transversal profilé (21), entre lesquels s'étendent plusieurs supports longitudinaux profilés (22, 23, 24, 25, 26, 27, 28).

5. Carrosserie selon la revendication 3, **caractérisée en ce qu'**un support transversal central supplémentaire (29) est prévu entre au moins une partie des supports longitudinaux.

6. Carrosserie selon la revendication 1 ou 2, **caractérisée en ce que** la paroi de fermeture (40) est pourvue d'un épaississement de section transversale (41) local.

7. Carrosserie selon la revendication 6, **caractérisée en ce que** l'épaississement de section transversale s'étend sur une partie majeure de la hauteur (Hg) de la paroi de fermeture (40) et possède par exemple une forme en V inversé.

8. Carrosserie selon la revendication 1 ou 2, **caractérisée en ce que** le dispositif d'enveloppe (11) est formé par une partie supérieure (42) et une partie inférieure (43).

9. Carrosserie selon la revendication 8, **caractérisée en ce que** la partie supérieure (42) présente des portions d'enveloppe (44) latérales et une portion d'enveloppe (45) horizontale supérieure, des premières extrémités libres (48) de la partie supérieure (42) coopérant avec des deuxièmes extrémités libres (49) de la partie inférieure (43).

10. Carrosserie selon la revendication 9, **caractérisée en ce que** les premières extrémités libres (48) et les deuxièmes extrémités libres (49) sont pourvues de gradins (50, 51), qui forment des connexions étagées.

11. Carrosserie selon la revendication 10, **caractérisée en ce que** la partie supérieure (42) et la partie inférieure (43) du dispositif d'enveloppe (11) sont connectées l'une à l'autre dans la région des connexions étagées par l'intermédiaire de vis (52).
